# EUROPEAN PATENT APPLICATION

(11) **EP 2 529 983 A1**
(43) Date of publication of application: **05.12.2012**
(21) Application number: 12167466.7
(22) Date of filing: 10.05.2012
(51) Int. Cl.: B60R 25/00

(54) **Vehicle security system for vehicle fleets**

(30) Priority: 31.05.2011 US 201113118828
(71) Applicant: Delphi Technologies, Inc., Troy, MI 48007 (US)
(72) Inventor: Tieman, Craig A., Westfield, IN Indiana 46074 (US); Peterson, Mark C., Carmel, IN Indiana 46074 (US)
(74) Representative: Denton, Michael John

(57) **Abstract**

A vehicle security system for securing a vehicle equipped to determine that a valid radio frequency identification RFID tag (14) is proximate to the vehicle when there is an attempt to start the vehicle. The system includes an authorization device (24) configured to determine that vehicle operation has been authorized, and an interference device (30) configured to receive an authorization signal from the authorization device. The interference device e.g. a jamming device is configured to interfere with the determination that a valid radio frequency identification tag is proximate to the vehicle when the authorization signal does not indicate that vehicle operation has been authorized. The system is readily installed in a vehicle as no electrical connections are required, except for an optional power connection.

## Description

### TECHNICAL FIELD OF INVENTION

The invention generally relates to vehicle security system for vehicle fleets, and more particularly relates to a device configured to interfere with the validation of a radio frequency identification tag when there is an unauthorized attempt to start the vehicle.

### BACKGROUND OF INVENTION

Vehicle fleet owners/managers that rent their vehicles to the general public or provide vehicles for employee use have various mechanisms to prevent unauthorized use of the vehicles. Typically, this is by way of securing the ignition keys for the vehicles. However, this may require that a person be present to distribute the vehicle keys, and so increases the operating costs of the fleet. As such, it would be advantageous if the keys could be left in the vehicles at all times, but that would make the vehicles easy to steal or subj ect to unauthorized use. What is needed is a way to prevent unauthorized use of a vehicle even though the ignition key for the vehicle is within the vehicle.

Many vehicles are equipped to determine that a valid radio frequency identification (RFID) tag is proximate to the vehicle when the vehicle is started. Typically these RFID tags are embedded in the ignition key of the vehicle. A security system has been suggested that removes the RFID tag from the key and relocates the RFID tag in a electromagnetic vault installed in the vehicle, but this damages the key in a way that requires the key to be replaced when the vehicle is sold and requires installing an switched antenna wire between the vault and a location proximate to the vehicle security system that verifies the presence of the RFID tag, and so incurs an undesirable expense.

### SUMMARY OF THE INVENTION

In accordance with one embodiment of this invention, a vehicle security system for securing a vehicle equipped to determine that a valid radio frequency identification tag is proximate to the vehicle when there is an attempt to start the vehicle is provided. The system includes an authorization device and an interference device. The authorization device is configured to determine that vehicle operation has been authorized. The interference device configured to receive an authorization signal from the authorization device. The interference device is configured to interfere with the determination that a valid radio frequency identification tag is proximate to the vehicle when the authorization signal does not indicate that vehicle operation has been authorized.

In another embodiment of the present invention, the interference device includes a radio frequency jamming device.

In yet another embodiment of the present invention, the authorization device is further configured to unlock a door of the vehicle when the authorization device determines that vehicle operation has been authorized.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:

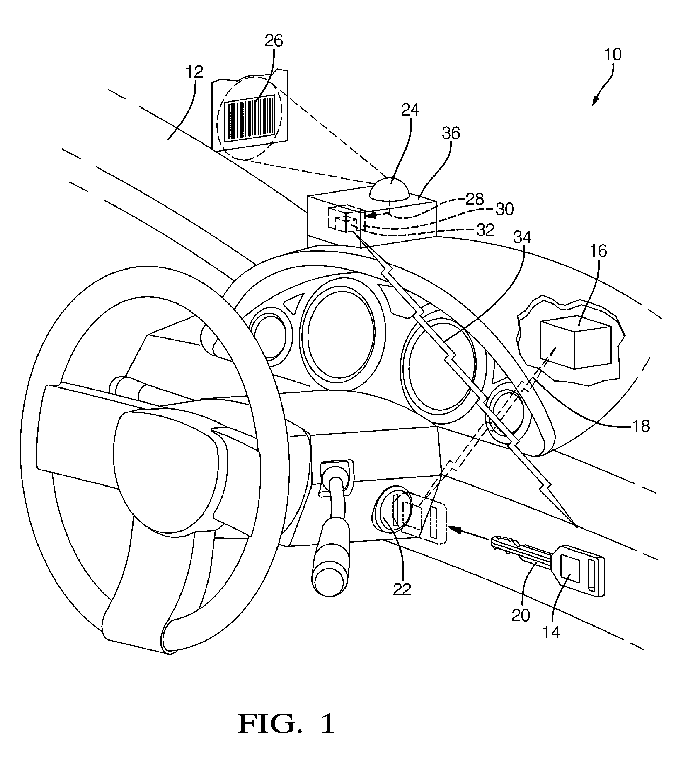

Fig. 1 is block diagram of a vehicle security system in accordance with one embodiment.

### DESCRIPTION OF THE PREFERRED EMBODIMENTS

Fig. 1 illustrates a non-limiting example of a vehicle security system 10 for securing a vehicle 12. The system 10 is useful when the vehicle 12 is equipped to determine that a valid radio frequency identification (RFID) tag 14 is proximate to the vehicle 12 when there is an attempt to start the vehicle 12. The vehicle 12 may be equipped with a vehicle immobilizer 16 configured to communicate with the RFID tag 14 over a radio frequency communication path 18. Typically, the immobilizer 16 is configured to detect that a key 20 is actuating, or has been inserted into, an ignition switch 22. Then the immobilizer 16 broadcasts a signal over the communication path 18 effective to activate the RFID tag 14, and the RFID tag 14 transmits a signal that includes an identification code. If the immobilizer 16 receives the identification code and determines that it is a recognized identification code, the immobilizer 16 does not prevent starting of an engine in the vehicle 12. However, if a recognized identification code is not received, the immobilizer 16 prevents the engine from starting and so immobilizes the vehicle 12.

The system 10 may include an authorization device 24 configured to determine that operation of the vehicle 12 has been authorized. The authorization device 24 may be equipped to read a bar code 26 on a receipt, either a paper receipt issued by a vehicle rental agency, or an image sent to and displayed on a smart phone. Alternatively, the authorization device 24 may be equipped to read a magnetic strip on a credit card presented by a person renting the vehicle, or a magnetic pattern imbedded in an employee identification badge. Those in the art will readily recognize that there are several other ways that the authorization device 24 may be equipped in order to determine that operation of the vehicle 12 has been authorized. When proper authorization has been determined, the authorization device may output an authorization signal 28 indicating that operation of the vehicle 12 has been authorized. Fig. 1 illustrates the authorization device being located on the vehicle dashboard, but other locations may be suitable.

The authorization device 24 may also be configured to communicate with a rental agency or fleet operations center in order to further verify the authenticity of the bar code 26 or what ever has been presented to the authorization device, and/or to send a message to the rental agency, fleet operations center, or a law enforcement agency if an unauthorized attempt to start the vehicle is detected. The authorization device 24 may also be configured to determine a time period for which the authorization is valid, and stop outputting the authorization signal 28 after that time period has expired. The authorization device 24 may include a processor (not shown) such as a microprocessor or other control circuitry as should be evident to those in the art. The processor may include memory, including non-volatile memory, such as electrically erasable programmable read-only memory (EEPROM) for storing one or more routines, thresholds and captured data. The one or more routines may be executed by the processor to perform steps for determining if signals received by the processor indicate that operation of the vehicle 12 has been authorized.

The system 10 may include an interference device 30 configured to receive the authorization signal 28 from the authorization device 24. The authorization signal 28, may be communicated to the interference device 30 by way of an electrical conductor such as wire, or may be communicated wirelessly. The interference device 30 is generally configured to interfere with the determination by the immobilizer 16 that a valid radio frequency identification tag, e.g. RFID tag 14, is proximate to the vehicle 12 when the authorization signal 28 does not indicate that vehicle operation has been authorized. The interference device 30 may have a wired connection (not shown) to the immobilizer 16 coupled to a relay or electronic switch arranged to enable/disable the immobilizer 16. However, such a wired connection may be inconvenient to install.

In one embodiment, the interference device may include a radio frequency jamming device 32. The jamming device 32 is generally configured to broadcast a radio frequency jamming signal 34 that interferes with communication between the RFID tag 14 and the immobilizer 16 by, for example, effectively breaking the communication path 18. The strength and content of the jamming signal 34 effective interfere with the communication path 18 are well known in the art, and may require customization for a particular family of RFID tags associate with a particular manufacturer of the vehicle 12. The jamming device may also include an antenna wire (not shown) so the jamming signal 34 originates as close as possible to the RFID tag 14.

The system 10 may also include an intrusion/entry detection system (not shown) that detects when a door of the vehicle 12 is opened. This detection system may be based on, but not limited to, ultrasonic, infrared, or microwave detection methods, or may simply monitor a door switch. Such a detection system may activate the jamming device 32 when an unauthorized person enters the vehicle 12.

It may be preferable for the vehicle 12 to be locked when authorized use has not been determined, and so it may be advantageous for authorization device to be configured to unlock a door of the vehicle 12 when the authorization device determines that vehicle operation has been authorized.

The authorization device 24 and interference device 30 may be in a single enclosure to make installation into the vehicle 12 simple. As long as all the RFID tags 14 in the fleet operate at the same frequency, the system 10 can be readily moved from one vehicle to another. The system may contain it's own power source (not shown) within the enclosure 36, for example a rechargeable battery connected to a solar cell mounted on the enclosure 36, or the system 10 may be connected to the electrical system of the vehicle 12, with or without a rechargeable within the enclosure 36.

Accordingly, a system 10 that prevents unauthorized persons from starting the vehicle 12 is provided. The system 10 is readily installed in a vehicle as no electrical connections are required, except for a power connection with some embodiments. Furthermore, the system 10 does not require that the RFID tag 14 be removed from the key 20.

## Claims

1. A vehicle security system for securing a vehicle equipped to determine that a valid radio frequency identification tag is proximate to the vehicle when there is an attempt to start the vehicle, said system comprising:
an authorization device configured to determine that vehicle operation has been authorized; and
an interference device configured to receive an authorization signal from the authorization device, said interference device configured to interfere with the determination that a valid radio frequency identification tag is proximate to the vehicle when the authorization signal does not indicate that vehicle operation has been authorized.

2. The system in accordance with claim 1, wherein the interference device comprises a radio frequency jamming device.

3. The system in accordance with claim 1, wherein the authorization device is further configured to unlock a door of the vehicle when the authorization device determines that vehicle operation has been authorized.
